# EUROPEAN PATENT APPLICATION

(11) **EP 4 369 215 A1**
(43) Date of publication of application: **15.05.2024**
(21) Application number: 22907900.9
(22) Date of filing: 13.12.2022
(51) Int. Cl.: G06F 16/25, G06F 16/28, G06F 16/22, G06F 40/205, G06F 40/279, G06F 40/30

(54) **ELECTRONIC DEVICE FOR COMBINING DATA AND METHOD OF CONTROLLING SAME**

(30) Priority: 13.12.2021 KR 20210177396
(71) Applicant: Samsung Electronics Co., Ltd., Suwon-si, Gyeonggi-do 16677 (KR)
(72) Inventor: SHIN, Haebin, Suwon-si Gyeonggi-do 16677 (KR); LEE, Kangwook, Suwon-si Gyeonggi-do 16677 (KR)
(74) Representative: Gulde & Partner
(86) International application number: PCT/KR2022/020243
(87) International publication number: WO 2023/113433

(57) **Abstract**

The present invention relates to an electronic device and a method of controlling same. The electronic device according to the present disclosure may comprise a memory and one or more processors, wherein the one or more processors: acquire a first data set and a second data set; acquire first vector information corresponding to entities included in the first data set and second vector information corresponding to entities included in the second data set on the basis of semantic information of the first data set and the second data set; acquire context information of the first data set and the second data set on the basis of class information of the first data set and the second data set; acquire third vector information corresponding to the entities included in the first data set and fourth vector information corresponding to the entities included in the second data set on the basis of the acquired context information; acquire first combinational vector information by combining the first vector information and the third vector information; acquire second combinational vector information by combining the second vector information and the fourth vector information; and generate a combined data set in which the first data set and the second data set are mapped to each other, on the basis of a first combinational vector and a second combinational vector.

## Description

### [Technical Field]

The disclosure relates to an electronic apparatus and a method for controlling thereof. More particularly, the disclosure relates to an electronic apparatus for performing semantic data joining operation based on the context of two independent data, and a method for controlling thereof.

### [Background Art]

An artificial intelligence (AI) system is a computer system that implements human-level intelligence and a system in which a machine learns, judges, and becomes smart, unlike rule-based systems. As the use of AI systems improves, a recognition rate may be improved or a user's intention may be understood more accurately. As such, rule-based systems are gradually being replaced by machine learning/deep learning-based AI systems.

With respect to a database management system, among a variety of fields in which the artificial intelligence technology may be applied in the information era, the development of a technology for managing vast amount of data has been accelerated. Various ways to efficiently perform classification, integration, and removal of data are attempted by reflecting the above trend. However, the data included in the plurality of systems may have an individual name, format, and content, so it is difficult to integrally manage the data, and there is inconvenience that a manager needs to perform a job to classify, integrate, and remove data one by one for independent separate data.

Accordingly, research and development of technology for classifying, integrating, and removing data included in an independent database is attempted by combining artificial intelligence technology to address the inconvenience above.

More particularly, in relation to data combination included in different systems among a method for managing data included in a database, data to be combined includes a same keyword and thus matching data based thereon is used, but there is a problem in that, based on the data to be combined semantically corresponds, the data does not include a keyword exactly corresponding to the meaning, so the data combination is not easily performed.

Even if different data do not include an exactly matching data, a method of grasping relative meaning of the data and mapping or joining the corresponding data is required.

The above information is presented as background information only to assist with an understanding of the disclosure. No determination has been made, and no assertion is made, as to whether any of the above might be applicable as prior art with regard to the disclosure.

### [Disclosure]

### [Technical Problem]

Aspects of the disclosure are to address at least the above-mentioned problems and/or disadvantages and to provide at least the advantages described below.

The present disclosure is designed to solve the above problems, and it is an object of the present disclosure to provide an electronic device and a method of controlling the same that semantically combines data by considering the relative meaning between two independent pieces of data.

### [Technical Solution]

Accordingly, an aspect of the disclosure is to provide an electronic apparatus according to an embodiment including a memory and at least one processor configured to obtain a first data set and a second data set, obtain first vector information corresponding to entities included in the first data set and second vector information corresponding to entities included in the second data set based on semantic information of the first data set and the second data set, obtain context information of the first data set and the second data set based on class information of the first data set and the second data set, obtain third vector information corresponding to entities included in the first data set and fourth vector information corresponding to entities included in the second data set based on the obtained context information, obtain first combination vector information by combining the first vector information and the third vector information and obtain second combination vector information by combining the second vector information and the fourth vector information, and generate a joined data set in which the first data set and the second data set are mapped based on the first combination vector and the second combination vector.

The processor may convert input first raw data to a first data set including standardized entities and convert second raw data to a second data set including standardized entities.

The semantic information may refer to general semantic information of the first data set and the second data set obtained from at least one of an external server or a memory, and the semantic information may refer to at least one of lexical semantic information, comprehensive semantic information, or peripheral semantic information.

The processor may obtain first vector information corresponding to entities included in the first data set and second vector information corresponding to entities included in the second data set by inputting the general semantic information of the first data set and the second data set to a first neural network model.

The processor may identify at least one first class information corresponding to a plurality of entities included in the first data set and identify at least one second class information corresponding to a plurality of second entities included in the second data set, and obtain first context information of the first data set based on first class information commonly corresponding to the plurality of first entities among the identified at least one first class information, and obtain second context information of the second data set based on second class information commonly corresponding to the plurality of second entities among the identified at least one second class information.

The processor may obtain third vector information corresponding to entities included in the first data set and fourth vector information corresponding to entities included in the second data set by inputting the first context information and the second context information to a second neural network model.

The processor may obtain the first combination vector information based on operation of the first vector information to which a first weight is assigned and the third vector information to which a second weight is assigned and obtain the second combination vector information based on operation of the second vector information to which a third weight is assigned and the fourth vector information to which a fourth weight is assigned.

The processor may identify at least one pair of mapped first combination vector and second combination vector having similarity between the mapped first combination vector and the second combination vector being greater than or equal to a preset value, and generate a joined data set by removing one of the first combination vector and the second combination vector from at least one pair of mapped first combination vector and second combination vector identified to have the similarity being greater than or equal to a preset value.

The class information may be information indicating an upper notion of entities included in the first data set and the second data set, and the context information may be contextual meaning in the first data set and the second data set obtained based on the class information.

Additional aspects will be set forth in part in the description which follows and, in part, will be apparent from the description, or may be learned by practice of the presented embodiments.

In accordance with an aspect of the disclosure, a method for controlling an electronic apparatus is provided. The method includes obtaining a first data set and a second data set, obtaining first vector information corresponding to entities included in the first data set and second vector information corresponding to entities included in the second data set based on semantic information of the first data set and the second data set, obtaining context information of the first data set and the second data set based on class information of the first data set and the second data set, obtaining third vector information corresponding to entities included in the first data set and fourth vector information corresponding to entities included in the second data set based on the obtained context information, obtaining first combination vector information by combining the first vector information and the third vector information and obtain second combination vector information by combining the second vector information and the fourth vector information, and generating a joined data set in which the first data set and the second data set are mapped based on the first combination vector and the second combination vector.

The obtaining a first data set and a second data set may include converting input first raw data to a first data set including standardized entities and converting second raw data to a second data set including standardized entities.

The semantic information may refer to general semantic information of the first data set and the second data set obtained from at least one of an external server or a memory, and the semantic information may refer to at least one of lexical semantic information, comprehensive semantic information, or peripheral semantic information.

The obtaining the first vector information and the second vector information may include obtaining first vector information corresponding to entities included in the first data set and second vector information corresponding to entities included in the second data set by inputting the general semantic information of the first data set and the second data set to a first neural network model.

The obtaining context information of the first data set and the second data set may include identifying at least one first class information corresponding to a plurality of entities included in the first data set and identify at least one second class information corresponding to a plurality of second entities included in the second data set, and obtaining first context information of the first data set based on first class information commonly corresponding to the plurality of first entities among the identified at least one first class information, and obtaining second context information of the second data set based on second class information commonly corresponding to the plurality of second entities among the identified at least one second class information.

The obtaining the third vector information and the fourth vector information may include obtaining third vector information corresponding to entities included in the first data set and fourth vector information corresponding to entities included in the second data set by inputting the first context information and the second context information to a second neural network model.

The obtaining the first combination vector information and the second combination vector information may include obtaining the first combination vector information based on operation of the first vector information to which a first weight is assigned and the third vector information to which a second weight is assigned and obtaining the second combination vector information based on operation of the second vector information to which a third weight is assigned and the fourth vector information to which a fourth weight is assigned.

The generating the joined data set may include identifying at least one pair of mapped first combination vector and second combination vector having similarity between the mapped first combination vector and the second combination vector being greater than or equal to a preset value, and generating a joined data set by removing one of the first combination vector and the second combination vector from at least one pair of mapped first combination vector and second combination vector identified to have the similarity being greater than or equal to a preset value.

The class information may be information indicating an upper notion of entities included in the first data set and the second data set, and the context information may be contextual meaning in the first data set and the second data set obtained based on the class information.

Other aspects, advantages, and salient features of the disclosure will become apparent to those skilled in the art from the following detailed description, which, taken in conjunction with the annexed drawings, discloses various embodiments of the disclosure.

### [Advantageous Effects]

According to the present disclosure, even if the two data do not include the same keyword in common, the data can be semantically combined in consideration of the relative meaning between the two independent data, and redundant data among the combined data can be removed.

### [Description of Drawings]

FIG. 1 is a block diagram illustrating a configuration of an electronic apparatus according to an embodiment of the disclosure;
FIG. 2 is a diagram illustrating a process of generating joined data based on relative meaning of independent two data according to an embodiment of the disclosure;
FIG. 3 is a diagram illustrating a process of generating joined data based on relative meaning of data made of a company name and data of a country name according to an embodiment of the disclosure;
FIG. 4 is a diagram illustrating a process of generating joined data based on relative meaning of data made of a function button name and data of a function category according to an embodiment of the disclosure;
FIG. 5 is a diagram illustrating a process of generating joined data from which overlapping data is removed based on relative meaning of first data made of a shoes product name and second data made of a shoes product name according to an embodiment of the disclosure;
FIG. 6 is a flowchart illustrating an operation of an electronic apparatus according to an embodiment of the disclosure; and
FIG. 7 is a block diagram illustrating a configuration of an electronic apparatus according to an embodiment of the disclosure.

Throughout the drawings, it should be noted that like reference numbers are used to depict the same or similar elements, features, and structures.

### [Mode for Invention]

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

In describing the disclosure, a description of known functions or configurations incorporated herein will be omitted as it may make the subject matter of the disclosure unclear.

In addition, the embodiments described below may be modified in various different forms, and the scope of the technical concept of the disclosure is not limited to the following embodiments. Rather, these embodiments are provided so that this disclosure will be thorough and complete, and will fully convey the scope of the disclosure to those skilled in the art.

The terms used in this disclosure are used merely to describe a particular embodiment of the disclosure, and are not intended to limit the scope of the claims.

In this document, the expressions "have," "may have," "including," or "may include" may be used to denote the presence of a feature (e.g., a component, such as a numerical value, a function, an operation, a part, or the like), and does not exclude the presence of additional features.

The expressions "A or B," "at least one of A and / or B," or "one or more of A and / or B," and the like include all possible combinations of the listed items. For example, "A or B," "at least one of A and B," or "at least one of A or B" includes (1) at least one A, (2) at least one B, (3) at least one A and at least one B all together.

In addition, expressions "first", "second", or the like, used in the disclosure may indicate various components regardless of a sequence and/or importance of the components, will be used only in order to distinguish one component from the other components, and do not limit the corresponding components.

It is to be understood that an element (e.g., a first element) is "operatively or communicatively coupled with / to" another element (e.g., a second element) is that any such element may be directly connected to the other element or may be connected via another element (e.g., a third element).

On the other hand, when an element (e.g., a first element) is "directly connected" or "directly accessed" to another element (e.g., a second element), it may be understood that there is no other element (e.g., a third element) between the other elements.

Herein, the expression "configured to" may be used interchangeably with, for example, "suitable for," "having the capacity to," "designed to," "adapted to," "made to," or "capable of." The expression "configured to" does not necessarily mean "specifically designed to" in a hardware sense.

Instead, under some circumstances, "a device configured to" may indicate that such a device can perform an action along with another device or part. For example, the expression "a processor configured to perform A, B, and C" may indicate an exclusive processor (e.g., an embedded processor) to perform the corresponding action, or a generic-purpose processor (e.g., a central processor (CPU) or application processor (AP)) that can perform the corresponding actions by executing one or more software programs stored in the memory device.

The terms, such as "module," "unit," "part", and so on are used to refer to an element that performs at least one function or operation, and such element may be implemented as hardware or software, or a combination of hardware and software. Further, except for when each of a plurality of "modules", "units", "parts", and the like needs to be realized in an individual hardware, the components may be integrated in at least one module or chip and be realized in at least one processor.

The various elements and regions in the drawings are schematically drawn. Accordingly, the technical spirit of the disclosure is not limited by the relative size or spacing depicted in the accompanying drawings.

Hereinafter, an embodiment of the disclosure will be described with reference to the accompanying drawings so that those skilled in the art may easily embody the disclosure.

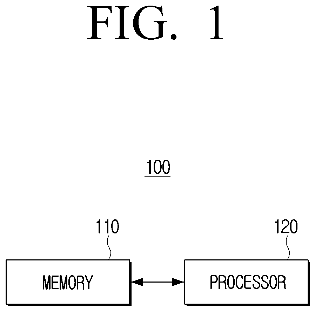

FIG. 1 is a block diagram illustrating a configuration of an electronic apparatus according to an embodiment of the disclosure.

Referring to FIG. 1, an electronic apparatus 100 may be implemented as a server or an electronic apparatus that includes a server. The electronic apparatus may not be limited thereto and may be implemented as various devices that can perform an operation, such as a smartphone, a desktop computer, a laptop computer, a tablet, a mobile device, a wearable device, a user terminal device, or the like.

The electronic apparatus 100 is not limited to the above device, and the electronic apparatus 100 may be implemented with the electronic apparatus 100 having two or more functions of the above devices.

The electronic apparatus 100 according to various embodiments of the disclosure may include a memory 110, a processor 120, and may be semantically joined based on a relative meaning between two independent data by interaction between the memory 110 and the processor 120.

The memory 110 may temporarily or non-temporarily store various programs or data and may deliver stored information to the processor 120 according to a call. The memory 110 may store various information required for operation, processing, or control operation of the processor 120 as an e-format.

The memory 110 may include, for example, at least one of a main memory device and an auxiliary memory device. The main memory device may be implemented using a semiconductor storage medium, such as a read-only memory (ROM) and/or a random access memory (RAM). The ROM may include, for example, a ROM of the related art, an erasable programmable ROM (EPROM), an electrically EPROM (EEPROM), and/or a mask-ROM. The RAM may include, for example, a dynamic RAM (DRAM) and/or a static RAM (SRAM). The auxiliary memory device may be implemented using at least one storage medium capable of permanently or semi-permanently storing data, such as a flash memory device, a secure digital (SD) card, a solid state drive (SSD), a hard disk drive (HDD), a magnetic drum, a compact disc (CD), an optical media, such as a digital versatile disc (DVD) or a laser disc, a magnetic tape, a magnet-optical media and/or a floppy disk.

The memory 110 according to various embodiments of the disclosure may store raw data received from an external server or input by a user command, data set including standardized entities, semantic information of a data set, class information of a data set, syntax information of data set, vector information of a data set, combination vector information of two independent data sets, and a joined data set.

The processor 120 controls the overall operation of the electronic apparatus 100. The processor 120 may be connected to the configuration of the electronic apparatus 100 including the memory 110 as described above, and execute at least one instruction stored in the memory 110 as described above to generally control the operation of the electronic apparatus 100. The processor 120 may be implemented with a single processor 120 and also a plurality of processors 120.

The processor 120 may be implemented in various ways. For example, the processor 120 may be implemented as at least one of an application specific integrated circuit (ASIC), an embedded processor, a microprocessor, a hardware control logic, a hardware finite state machine (FSM), a digital signal processor (DSP), or the like.

The processor 120 may include one or more of a central processing unit (CPU), a micro controller unit (MCU), a micro processing unit (MPU), a controller, an application processor (AP), a communication processor (CP), and an Advanced Reduced instruction set computing (RISC) Machine (ARM) processor or may be defined as a corresponding term. The processor 120 may be implemented in a system on chip (SoC) type or a large scale integration (LSI) type which a processing algorithm is implemented therein or in a field programmable gate array (FPGA). The processor 120 may perform various functions by executing computer executable instructions stored in the memory 110. The processor 120 may include at least one of an AI-exclusive processor, such as a graphics-processing unit (GPU), a neural processing unit (NPU), a visual processing unit (VPU), or the like, in order to perform an AI function.

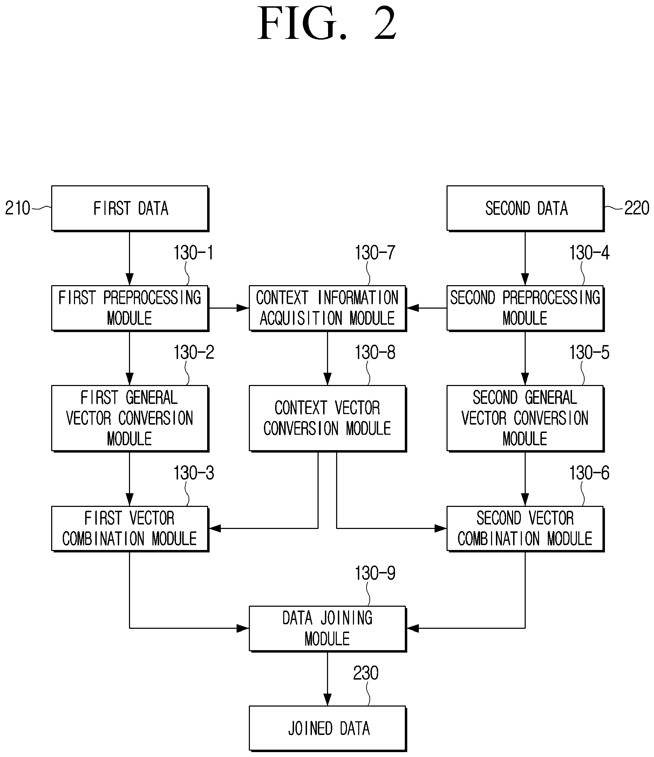

The specific method for controlling the electronic apparatus 100 of the processor 120 according to the disclosure will be described with reference to FIGS. 2 to 6.

FIG. 2 is a diagram illustrating a process of generating joined data based on relative meaning of independent two data according to an embodiment of the disclosure.

Referring to FIG. 2, the processor 120 may obtain the first data set through a first preprocessing module 130-1 and the second data set through a second preprocessing module 130-4.

The processor 120 may convert the first raw data corresponding to first data 210 inputted through the first preprocessing module into a first data set including standardized entities. In addition, the processor 120 may convert second raw data corresponding to second data 220 inputted through a second preprocessing module 130-4 into a second data set including standardized entities.

The raw data refers to data not having a certain format, that is, data which is not specified.

Here, entity refers to a specific object included in a data set and may be represented as instance, object, or the like.

The processor 120 may obtain first vector information corresponding to the first data set based on the first semantic information of the first data set through a first general vector conversion module 130-2, and obtain second vector information corresponding to the second data set based on the first semantic information of the second data set through a second general vector conversion module 130-5. The semantic information may refer to general semantic information of the first data set and the second data set obtained from at least one of an external server or a memory, and the semantic information may refer to at least one of lexical semantic information, comprehensive semantic information, or peripheral semantic information.

The processor 120 may obtain first vector information corresponding to the first data set and second vector information corresponding to the second data set by inputting the general semantic information of the first data set and the second data set to a first neural network model (e.g., general semantic vector conversion model).

As described above, the processor 120 may obtain first vector information and second vector information corresponding to each of the data included in the first data set and the second data set, obtain context information of the first data set based on the class information of the first data set through a context information acquisition module 130-7, and obtain context information of the second data set based on the class information of the second data set.

The contextual information refers to the contextual meaning in a data set aside from a literal meaning of specific data based on the meaning, content, context, or the like, of other data included in the data set including specific data. The contextual information is based on a series of metadata or class information that may be obtained within a data set of each of the first data set or the second data set. For example, not only explicit information, such as a column name, a table name, which may be obtained from a table on a database, but also implicit information, such as commonness between entities included in each data set, relationship, or the like, correspond thereto.

The class information refers to the upper concept information in which entities of the same properties with shared attributes are grouped into one. For example, not only explicit information, such as a column name, a table name, which may be obtained from a table on a database, but also implicit information, such as commonness between entities included in each data set, relationship, or the like, correspond thereto.

The processor 120 may identify at least one class information corresponding to a plurality of first entities included in the first data set, and identify at least one second class information corresponding to a plurality of second entities included in the second data set.

The processor 120 may obtain first context information of the first data set based on first class information commonly corresponding to a plurality of first entities of the at least one first class information identified through a context vector conversion module 130-8. The processor 120 may obtain second context information of the second data set based on second class information commonly corresponding to a plurality of second entities of the at least one second class information identified through the context vector conversion module 130-8.

The processor 120 may obtain third vector information corresponding to the first data set and fourth vector information corresponding to the second data set based on context information obtained through the context vector conversion module 130-8.

The processor 120 may input the first context information and the second context information into a second neural network model (e.g., a context vector conversion model) to obtain third vector information corresponding to the first data set and fourth vector information corresponding to the second data set.

The processor 120 may combine the first vector information and the third vector information through a first vector combination module 130-3 to obtain first combination vector information, and combine the second vector information and the fourth vector information through a second vector combination module 130-6 to obtain second combination vector information.

The processor 120 may obtain the first combination vector information based on operation of the first vector information to which a first weight is assigned and the third vector information to which a second weight is assigned and obtain the second combination vector information based on operation of the second vector information to which a third weight is assigned and the fourth vector information to which a fourth weight is assigned.

The processor 120 may generate a joined data set 530 in which the first data set and the second data set are mapped based on the first combination vector and the second combination vector through a data joining module 130-9.

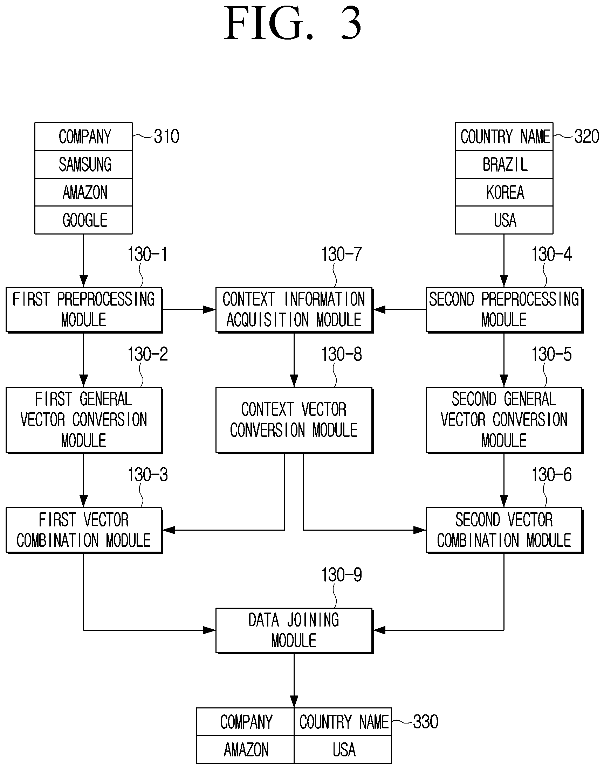

An operation of the processor 120 according to an embodiment of the disclosure may describe a specific example through FIGS. 3 to 5.

FIG. 3 is a diagram illustrating a process of generating joined data based on relative meaning of data made of a company name and data of a country name according to an embodiment of the disclosure.

Referring to FIG. 3, the processor 120 may obtain a first data set that includes standardized entities called "Samsung," "Amazon", and "Google" via the first pre-processing module 130-1 with first raw data 310 associated with the "Company name". The processor 120 may obtain a second data set including the standardized entities called "Brazil", "Korea", and "United States (US)" via the second preprocessing module 130-4 from second raw data 320 associated with the "country name".

The processor 120 may obtain first vector information corresponding to the first data set based on the semantic information of the first data set through the first general vector conversion module 130-2. The processor 120 may obtain second vector information corresponding to the second data set based on the semantic information of the second data set through the second general vector conversion module 130-5.

The semantic information which is a basis for obtaining the first vector information and the second vector information may refer to general semantic information of the first data set and the second data set obtained from at least one of an external server or the memory 110. The general semantic information may refer to at least one of lexical semantic information, comprehensive semantic information, or peripheral semantic information.

For example, based on the first data set containing the word "Amazon," the processor 120 may obtain, from an external server or the memory 110, general semantic information, such as "rainforest located in South America," "IT enterprise based on e-commerce in the United States of America (USA)," which are lexical meaning and "lung of the earth," which is implicit meaning information, and "tropical rain forest," "jungle," "forest or wooded place," which are peripheral meaning information, and the like.

As described above, the processor 120 may obtain first vector information and second vector information corresponding to each of the data included in the first data set and the second data set, and may obtain context information of the first data set and the second data set based on the class information of the first data set and the second data set.

For example, the class information of "Amazon" may be "company name" or "place name".

Based on the plurality of data included in the first data set being "Google", "Amazon", and "Samsung", the processor 120 may identify the first class information as a "company name". Based on the plurality of data included in the second data set being "Brazil", "Korea," and "US", the processor 120 may identify the second class information as "country name".

The processor 120 may obtain the first context information of the first data set of "company name" based on the first class information commonly corresponding to a plurality of first entities "Samsung", "Amazon", "Google" through the context vector conversion module 130-8, and may obtain the second context information of a second data set called "Country name" based on the second class information commonly corresponding to a plurality of second entities "Brazil", "Korea", and "USA".

The processor 120 may obtain third vector information corresponding to the first data set based on the obtained first context information, and obtain fourth vector information corresponding to the second data set based on the obtained second context information.

The processor 120 may obtain first combination vector information by combining the first vector information and the third vector information, and combine the second vector information and the fourth vector information to obtain second combination vector information.

The processor 120 may obtain the first combination vector information based on the operation of the first vector information to which the first weight is assigned and the third vector information to which the second weight is assigned, and obtain second combination vector information based on the operation of the fourth vector information assigned with the third weight and the second vector information to which the fourth weight is assigned.

The processor 120 may generate a combined data set 330 in which the entity "Amazon" included in the first data set and the "US" included in the second data set are mapped based on the first combination vector and the second combination vector.

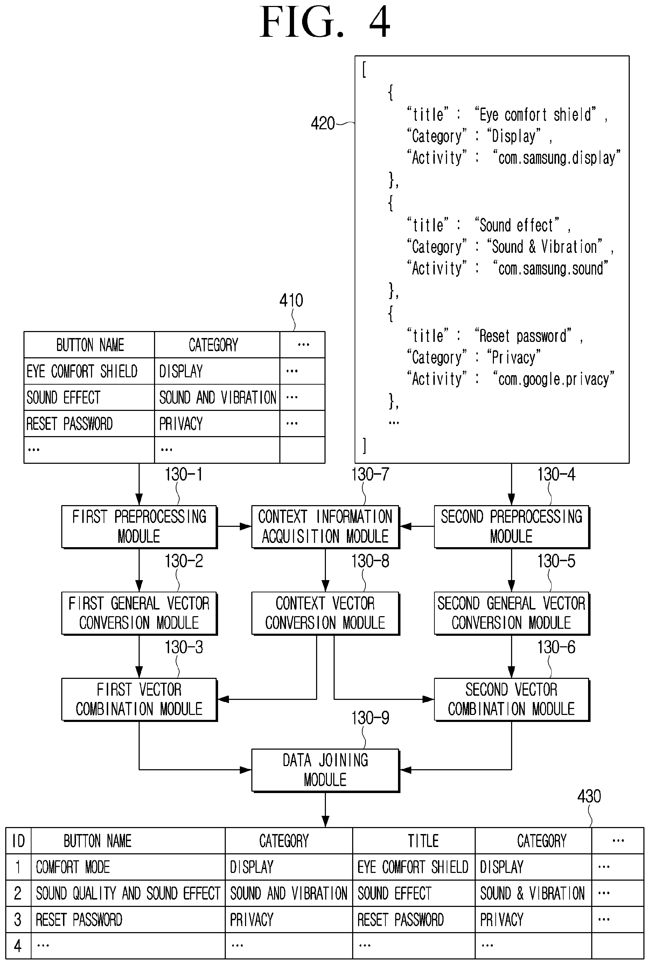

FIG. 4 is a diagram illustrating a process of generating joined data based on relative meaning of data made of a function button name and data of a function category according to an embodiment of the disclosure.

Referring to FIG. 4, the processor 120 may obtain the first data set that includes standardized entities, such as "eye comfort shield", "quality effect", "reset password", "display", "sound and vibration", "privacy" through the first preprocessing module 130-1 for first raw data 410 associated with the "function button name" and "function category". The processor 120 may also obtain a second data set including standardized entities, such as "eye comfort shield", "sound effect", "reset password", "display", "sound & vibration", "privacy" through the second preprocessing module 130-4 for second raw data 420 associated with the "title" and "category" displayed in the computer language.

The processor 120 may obtain first vector information corresponding to the first data set based on semantic information of the first data set through the first general vector conversion module 130-2. The processor 120 may obtain the second vector information corresponding to the second data set based on semantic information of the second data set through the second general vector conversion module 130-5.

The semantic information which is a basis for obtaining the first vector information and the second vector information may refer to general semantic information of the first data set and the second data set obtained from at least one of an external server or the memory 110, and the general semantic information may refer to at least one of lexical semantic information, comprehensive semantic information, or peripheral semantic information.

For example, based on the first data set including the word "display," the processor 120 may obtain, from an external server or the memory 110, general semantic information, such as "screen," "panel showing graphical image," "display," "show," which are lexical meaning, "component of a mobile phone" which is peripheral semantic information, and "high-tech industry" which is the general meaning information.

As described above, the processor 120 may obtain first vector information and second vector information corresponding to each of the data included in the first data set and the second data set, and may obtain context information of the first data set and the second data set based on the class information of the first data set and the second data set.

For example, the class information of "comfort mode" may be a "function button name" and the class information of the "display" may be a "function category". The class information of the "eye comfort shield" may be "title", and the class information of the "display" may be "category".

Based on a plurality of data included in the first data set being "display," "sound and vibration," "privacy," the processor 120 may identify the first class information as a "function category". Based on the plurality of data included in the second data set is "display", "sound & vibration", "privacy", the processor 120 may identify the second class information as "category".

The processor 120 may obtain the first context information of the first data set as "function category" based on the first class information commonly corresponding to the plurality of first entities "display", "sound & vibration", "privacy", via the context vector conversion module 130-8, and may obtain second context information of the second data set "category" based on the second class information commonly corresponding to the plurality of second entities "display", "sound & vibration", and "privacy".

The processor 120 may obtain third vector information corresponding to the first data set based on the obtained first context information, and obtain fourth vector information corresponding to the second data set based on the obtained second context information.

The processor 120 may combine the first vector information and the third vector information to obtain first combination vector information, and combine the second vector information and the fourth vector information to obtain second combination vector information.

The processor 120 may obtain the first combination vector information based on the operation of the first vector information to which the first weight is assigned and the third vector information to which the second weight is assigned, and obtain the second combination vector information based on the operation of the second vector information to which the third weight is assigned and the fourth vector information to which the fourth weight is assigned.

The processor 120 may generate a combination data set 430 in which the entities "comfort mode," "display," included in the first data set and entities "eye comfort mode", "display" included in the second data set are mapped based on the first combination vector and the second combination vector.

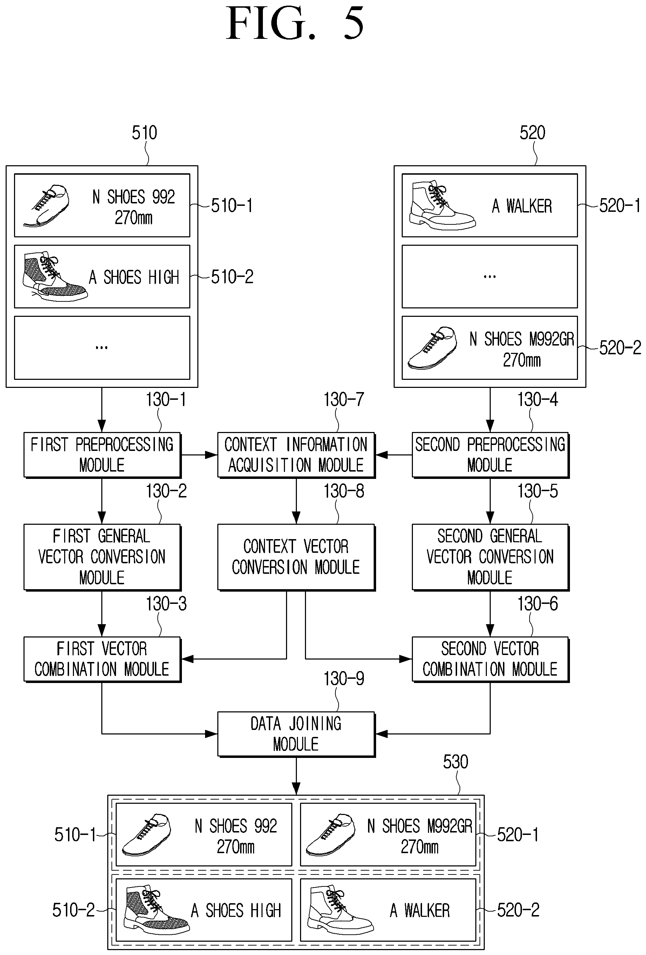

FIG. 5 is a diagram illustrating a process of generating joined data from which overlapping data is removed based on relative meaning of first data made of a shoes product name and second data made of a shoes product name according to an embodiment of the disclosure.

Referring to FIG. 5, the processor 120 may obtain a first data set including standardized entities called "N Shoes 992 270 mm" and "A shoes high" via the first pre-processing module 130-1 with first raw data 510 associated with the "shoes product". The processor 120 may obtain a second data set including standardized entities called "N shoes M992GR 270 mm", "A walker" via second pre-processing module 130-4 with second raw data 520 associated with a "shoes product".

The processor 120 may obtain first vector information corresponding to the first data set based on general semantic information, such as "shoes" of the first data set via the first general vector conversion module 130-2. The processor 120 may obtain second vector information corresponding to the second data set based on general semantic information, such as "shoes" of the second data set via the second general vector conversion module 130-5.

As described above, the processor 120 may obtain first vector information and second vector information corresponding to each of the data included in the first data set and the second data set, and may obtain context information of the first data set and the second data set based on the class information "shoes product" of the first data set and the second data set.

For example, the class information of "Amazon" may be "company name" or "place name".

Based on the plurality of data included in the first data set is "N shoes 992 270 mm", "A shoes high", the processor 120 may identify the first class information as a "shoes product". Based on the plurality of data included in the second data set is "N shoes M992GR 270 mm", " A walker", the processor 120 may identify the second class information as a "shoes product".

The processor 120 may obtain first context information of a first data set "shoes product" based on first class information commonly corresponding to a plurality of first entities "N shoes 992 270 mm", "A shoes high", via the context vector conversion module 130-8, and may obtain second context information of a second data set "shoes product" based on second class information commonly corresponding to a plurality of second entities "N shoes M992GR 270 mm", " A walker".

The processor 120 may obtain third vector information corresponding to the first data set based on the obtained first context information, and obtain fourth vector information corresponding to the second data set based on the obtained second context information.

The processor 120 may combine the first vector information and the third vector information to obtain first combination vector information, and combine the second vector information and the fourth vector information to obtain second combination vector information.

The processor 120 may obtain the first combination vector information based on the operation of the first vector information to which the first weight is assigned and the third vector information to which the second weight is assigned, and obtain the second combination vector information based on the operation of the fourth vector information to which the third weight is assigned and the fourth vector information to which the fourth weight is assigned.

The processor 120 may generate the combined data set 330 in which the entity "N shoes 992 270 mm" included in the first data set and the "N shoes M992GR 270 mm" included in the second data set are mapped based on the first combination vector and the second combination vector.

The processor 120 may identify whether the similarity between the first combination vector corresponding to the mapped "N shoes 992 270 mm" and the second combination vector corresponding to "N shoes M992GR 270 mm" is greater than or equal to a predetermined value. Based on the identified similarity between the first combination vector corresponding to the "N shoes 992 270 mm" and the second combination vector corresponding to "N shoes M992GR 270 mm" being identified as being greater than or equal to a predetermined value, the processor 120 may generate combined data from which one of the first combination vector corresponding to "N shoes 992 270 mm" and the second combination vector corresponding to "N shoes M992GR 270 mm" are removed. For example, based on the first combination vector and the second combination vector meaning substantially the same shoe product, it is an overlapping shoe product, so that one of the duplicated shoe product data is removed for efficient data management.

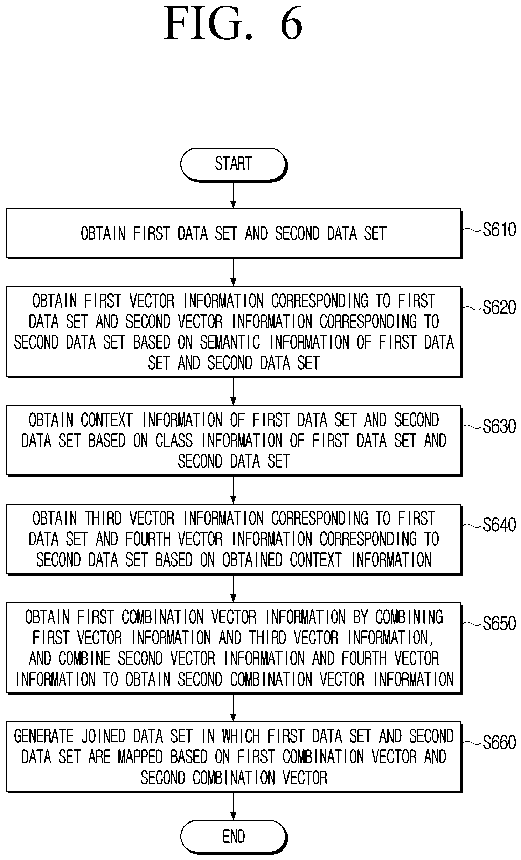

FIG. 6 is a flowchart illustrating an operation of an electronic apparatus according to an embodiment of the disclosure.

Referring to FIG. 6, the electronic apparatus 100 may obtain the first data set and the second data set in operation S610. The electronic apparatus 100 may convert input first raw data to a first data set including standardized entities and convert second raw data to a second data set including standardized entities.

The electronic apparatus 100 may obtain first vector information corresponding to the first data set and second vector information corresponding to the second data set based on semantic information of the first data set and the second data set in operation S620. The semantic information may refer to general semantic information of the first data set and the second data set obtained from at least one of an external server or the memory, and the general semantic information may refer to at least one of lexical semantic information, comprehensive semantic information, or peripheral semantic information.

The electronic apparatus 100 may obtain context information of the first data set and the second data set based on the class information of the first data set and the second data set in operation S630.

The electronic apparatus 100 may identify at least one first class information corresponding to a plurality of first entities included in a first data set, and identify at least one second class information corresponding to a plurality of second entities included in the second data set.

The electronic apparatus 100 may obtain first context information of the first data set based on first class information commonly corresponding to the plurality of first entities among the identified at least one first class information, and obtain second context information of the second data set based on second class information commonly corresponding to the plurality of second entities among the identified at least one second class information.

The electronic apparatus 100 may obtain the third vector information corresponding to the first data set and the fourth vector information corresponding to the second data set based on the obtained context information in operation S640.

The electronic apparatus 100 may obtain first combination vector information by combining the first vector information and the third vector information, and combine the second vector information and the fourth vector information to obtain second combination vector information in operation S650.

The electronic apparatus 100 may obtain the first combination vector information based on operation of the first vector information to which a first weight is assigned and the third vector information to which a second weight is assigned and obtain the second combination vector information based on operation of the second vector information to which a third weight is assigned and the fourth vector information to which a fourth weight is assigned.

The electronic apparatus 100 may generate a joined data set in which the first data set and the second data set are mapped based on the first combination vector and the second combination vector in operation S660. The electronic apparatus 100 may identify at least one pair of mapped first combination vector and second combination vector having similarity between the mapped first combination vector and the second combination vector being greater than or equal to a preset value, and generate a joined data set by removing one of the first combination vector and the second combination vector from at least one pair of mapped first combination vector and second combination vector identified to have the similarity being greater than or equal to a preset value.

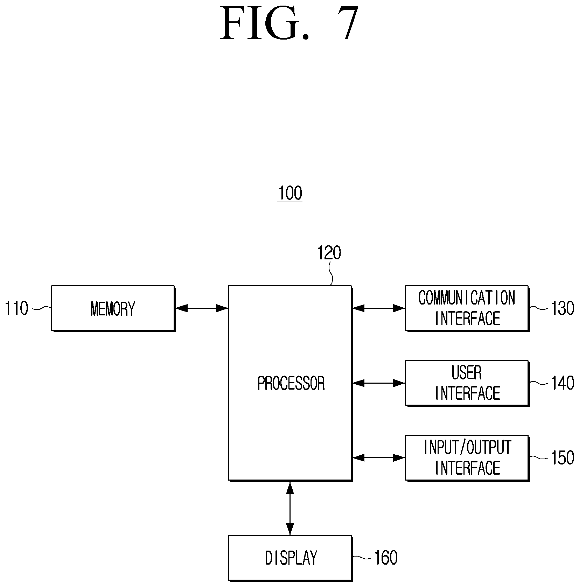

FIG. 7 is a block diagram illustrating a configuration of an electronic apparatus according to an embodiment of the disclosure.

Referring to FIG. 7, the memory 110 and the processor 120 have been described above, and a communication interface 130, a user interface 140, an input/output interface 150, and a display 160 will be described with reference to FIG. 7.

The communication interface 130 may include a wireless communication interface, a wired communication interface, or an input interface. The wireless communication interface may communicate with various external devices using a wireless communication technology or a mobile communication technology. Examples of such wireless communication technologies include, for example, Bluetooth, Bluetooth low energy, controller area network (CAN) communications, wireless fidelity (Wi-Fi), Wi-Fi Direct, ultrawide band (UWB), Zigbee, infrared data association (IrDA), Near Field Communication (NFC), and the like. The mobile communication technology may include third generation partnership project (3GPP), wi-max, long term evolution (LTE), fifth generation (5G), or the like. The wireless communication interface may be implemented using an antenna, a communication chip, and a substrate capable of transmitting electromagnetic waves to the outside or receiving electromagnetic waves transmitted from the outside.

The wired communication interface may perform communication with various external devices based on a wired communication network. The wired communication network may be implemented using a physical cable, such as, for example, a pair cable, a coaxial cable, an optical fiber cable, or an Ethernet cable.

The wireless communication interface and the wired communication interface may be omitted in accordance with an embodiment. Accordingly, the electronic apparatus 100 may include only a wireless communication interface or may include only a wired communication interface. The electronic apparatus 100 may include an integrated communication interface that supports both a wireless connection by a wireless communication interface and a wired connection by a wired communication interface.

The electronic apparatus 100 may include a plurality of communication interfaces 130, which are not limited to the case of including one communication interface 130 that performs one type of communication connection.

The processor 120 according to various embodiments of the disclosure may communicate with various external electronic apparatuses or servers that are outdoor or indoor through the communication interface 130.

The processor 120 may perform a communication connection with a television (TV), an air conditioner, a washing machine, a refrigerator, a dryer, a microwave oven, a gas range, an inductor, a boiler, a coffee pot, a dryer, a lamp, a projector, a speaker, a computer, a notebook, a tablet, a smart phone, a wired telephone, and the like, through a communication interface 130 to transmit information on an emergency situation, information on a moving path of the electronic apparatus 100, or a signal for controlling an external electronic apparatus, or receive various signals from an external electronic apparatus.

The processor 120 may perform a communication connection with the server through the communication interface 130 to transmit the first raw data, the second raw data, the first data set, the second data set, the general meaning information, the context information, or the combined data set to the server or receive the combined data set from the server.

The user interface 140 may include a button, a lever, a switch, a touch-type interface, and the like, and the touch-type interface may be implemented in a manner that receives an input to a user's touch on a screen of the display 160.

The processor 120 according to another embodiment of the disclosure may receive the first raw data, the second raw data, the first data set or the second data set through the user interface 140, and may receive a command for selecting a data joining operation and a duplicate data removal operation.

The input/output interface 150 may be connectable to another device separate from the electronic apparatus 100, for example, an external storage device. For example, the input/output interface 150 may include a universal serial bus (USB) and may be at least one of a high-definition multimedia interface (HDMI), a mobile high-definition link (MHL), a universal serial bus (USB), a display port (DP), Thunderbolt, a video graphics array (VGA) port, red, green, and blue (RGB) port, d-subminiature (D-SUB), digital visual interface (DVI), and the like. The input and output interface 150 may input and output at least one of an audio signal or a video signal. According to an embodiment of the disclosure, the input and output interface 150 may include a port to input and output only an audio signal or a port to input and output only a video signal as a separate port, or may be implemented as a port which input and output both the audio signal and the video signal.

The processor 120 according to another embodiment of the disclosure may be connected to an external device through the I/O interface 150 to transmit the first raw data, the second raw data, the first data set, the second data set or the combined data to the external device, or may receive the first raw data, the second raw data, the first data set, the second data set, or the combined data from an external device. The processor 120 may be connected to an external device through the input/output interface 150 to transmit the combined data or the combined data from which the redundant data has been removed to the external device.

A method according to one or more embodiments of the disclosure may be provided included a computer program product. The computer program product may be exchanged between a seller and a purchaser as a commodity. The computer program product may be distributed in the form of a machine-readable storage medium (e.g., a compact disc read only memory (CD-ROM)), or distributed (e.g., download or upload) online directly among at least two user devices (e.g., smartphones) through an application store (e.g., PlayStore^{™}). In the case of online distribution, at least a portion of the computer program product (e.g., downloadable app) may be at least stored temporarily in a storage medium, such as a server of a manufacturer, a server of an application store, or a memory of a relay server, or temporarily generated.

While the disclosure has been shown and described with reference to various embodiments thereof, it will be understood by those skilled in the art that various changes in form and details may be made therein without departing from the spirit and scope of the disclosure as defined by the appended claims and their equivalents.

## Claims

1. An electronic apparatus comprising:
a memory; and
at least one processor,
wherein the at least one processor is configured to:
obtain a first data set and a second data set,
obtain first vector information corresponding to entities included in the first data set and second vector information corresponding to entities included in the second data set based on semantic information of the first data set and the second data set,
obtain context information of the first data set and the second data set based on class information of the first data set and the second data set,
obtain third vector information corresponding to entities included in the first data set and fourth vector information corresponding to entities included in the second data set based on the obtained context information,
obtain first combination vector information by combining the first vector information and the third vector information and obtain second combination vector information by combining the second vector information and the fourth vector information, and
generate a joined data set in which the first data set and the second data set are mapped based on the first combination vector and the second combination vector.

2. The electronic apparatus of claim 1, wherein the processor is further configured to:
convert input first raw data to a first data set including standardized entities, and
convert second raw data to a second data set including standardized entities.

3. The electronic apparatus of claim 1,
wherein the semantic information refers to general semantic information of the first data set and the second data set obtained from at least one of an external server or a memory, and
wherein the semantic information refers to at least one of lexical semantic information, comprehensive semantic information, or peripheral semantic information.

4. The electronic apparatus of claim 3, wherein the processor is further configured to obtain first vector information corresponding to entities included in the first data set and second vector information corresponding to entities included in the second data set by inputting the general semantic information of the first data set and the second data set to a first neural network model.

5. The electronic apparatus of claim 1, wherein the processor is further configured to:
identify at least one first class information corresponding to a plurality of entities included in the first data set,
identify at least one second class information corresponding to a plurality of second entities included in the second data set,
obtain first context information of the first data set based on first class information commonly corresponding to the plurality of first entities among the identified at least one first class information, and
obtain second context information of the second data set based on second class information commonly corresponding to the plurality of second entities among the identified at least one second class information.

6. The electronic apparatus of claim 5, wherein the processor is further configured to obtain third vector information corresponding to entities included in the first data set and fourth vector information corresponding to entities included in the second data set by inputting the first context information and the second context information to a second neural network model.

7. The electronic apparatus of claim 1, wherein the processor is further configured to:
obtain the first combination vector information based on operation of the first vector information to which a first weight is assigned and the third vector information to which a second weight is assigned, and
obtain the second combination vector information based on operation of the second vector information to which a third weight is assigned and the fourth vector information to which a fourth weight is assigned.

8. The electronic apparatus of claim 1, wherein the processor is further configured to:
identify at least one pair of mapped first combination vector and second combination vector having similarity between the mapped first combination vector and the second combination vector being greater than or equal to a preset value; and
generate a joined data set by removing one of the first combination vector and the second combination vector from at least one pair of mapped first combination vector and second combination vector identified to have the similarity being greater than or equal to a preset value.

9. The electronic apparatus of claim 1,
wherein the class information is information indicating an upper notion of entities included in the first data set and the second data set, and
wherein the context information is contextual meaning in the first data set and the second data set obtained based on the class information.

10. A method for controlling an electronic apparatus, the method comprising:
obtaining a first data set and a second data set;
obtaining first vector information corresponding to entities included in the first data set and second vector information corresponding to entities included in the second data set based on semantic information of the first data set and the second data set;
obtaining context information of the first data set and the second data set based on class information of the first data set and the second data set;
obtaining third vector information corresponding to entities included in the first data set and fourth vector information corresponding to entities included in the second data set based on the obtained context information;
obtaining first combination vector information by combining the first vector information and the third vector information and obtain second combination vector information by combining the second vector information and the fourth vector information; and
generating a joined data set in which the first data set and the second data set are mapped based on the first combination vector and the second combination vector.

11. The method of claim 10, wherein the obtaining of the first data set and the second data set comprises converting input first raw data to a first data set including standardized entities and converting second raw data to a second data set including standardized entities.

12. The method of claim 10,
wherein the semantic information refers to general semantic information of the first data set and the second data set obtained from at least one of an external server or a memory, and
wherein the semantic information refers to at least one of lexical semantic information, comprehensive semantic information, or peripheral semantic information.

13. The method of claim 12, wherein the obtaining of the first vector information and the second vector information comprises obtaining first vector information corresponding to entities included in the first data set and second vector information corresponding to entities included in the second data set by inputting the general semantic information of the first data set and the second data set to a first neural network model.

14. The method of claim 10, wherein the obtaining of the context information of the first data set and the second data set comprises:
identifying at least one first class information corresponding to a plurality of entities included in the first data set and identify at least one second class information corresponding to a plurality of second entities included in the second data set; and
obtaining first context information of the first data set based on first class information commonly corresponding to the plurality of first entities among the identified at least one first class information, and obtain second context information of the second data set based on second class information commonly corresponding to the plurality of second entities among the identified at least one second class information.

15. The method of claim 14, wherein the obtaining of the third vector information and the fourth vector information comprises obtaining third vector information corresponding to entities included in the first data set and fourth vector information corresponding to entities included in the second data set by inputting the first context information and the second context information to a second neural network model.
